Europäisches Patentamt

European Patent Office

Office européen des brevets

(19)

(11) EP 0 547 948 B1

(12) **FASCICULE DE BREVET EUROPEEN**

(45) Date de publication et mention
de la délivrance du brevet:
**16.04.1997 Bulletin 1997/16**

(51) Int Cl.6: **G01B 7/16**, G01L 7/20,
G01L 1/22

(21) Numéro de dépôt: **92403377.2**

(22) Date de dépôt: **11.12.1992**

(54) **Capteur mécanique comprenant un film de polymère**

Mechanische Sonde mit polymerer Membrane

Mechanical transducer including a polymeric film

(84) Etats contractants désignés:
**DE GB IT**

(30) Priorité: **17.12.1991 FR 9115640**

(43) Date de publication de la demande:
**23.06.1993 Bulletin 1993/25**

(73) Titulaire: **THOMSON-CSF**
**75008 Paris (FR)**

(72) Inventeurs:
 • **Bureau, Jean-Marc**
 **F-92402 Courbevoie Cédex (FR)**
 • **Coussot, Gérard**
 **F-92402 Courbevoie Cédex (FR)**

(74) Mandataire: **Guérin, Michel et al**
**THOMSON-CSF-S.C.P.I.,**
**13, Avenue du Président**
**Salvador Allende**
**94117 Arcueil Cédex (FR)**

(56) Documents cités:
EP-A- 0 065 419          EP-A- 0 087 665
EP-A- 0 321 255          EP-A- 0 451 636
US-A- 4 199 650

 • THIN SOLID FILMS, vol. 182, no. 1, 20 Décembre
 1989, Lausanne CH, pp. 333-344; E. KAGERER et
 al.: 'Ion Beam Sputter Deposition Of Thin Film
 Sensors For Applications In Highly Loaded
 Contacts'
 • PATENT ABSTRACTS OF JAPAN, vol. 15, no.
 273 (E-1088) 11 juillet 1991 ; & JP-A-3 093 201

**Description**

La présente invention concerne un capteur mécanique utilisant un film de polymère, ce capteur permettant de mesurer des contraintes telles que des déplacements, des déformations ou des pressions.

A l'heure actuelle, des domaines aussi variés que l'automobile, l'industrie, le médical ou le domestique nécessitent le contrôle de contraintes variées qui peuvent s'exercer sur différentes pièces ou différents organes.

Pour la réalisation de capteurs mécaniques, une des techniques les plus employées est l'utilisation d'un corps conducteur élastique, en contact avec l'objet de mesure. Le déplacement ou la déformation de l'objet ou la contrainte que cet objet exerce sur le capteur mécanique engendrent la déformation du conducteur et provoquent une modulation de sa résistance.

Ainsi il existe déjà des capteurs mécaniques utilisant des films de polymère dont les propriétés isolantes et mécaniques (souplesse, élasticité) permettent de disposer d'un matériau isolant en couche mince facile à intégrer à un objet dont on veut mesurer la déformation (allongement, courbure...), ce matériau étant capable de suivre des déformations importantes. Ces films de polymère sont recouverts d'une couche mince métallique qui constitue l'élément sensible à la contrainte.

Il a notamment été proposé d'imprimer des résistances formées dans un polymère conducteur, sur une matière plastique (EP-A-321 225).

Pour éviter les problèmes de vieillissement tels que l'oxydation, un métal noble est généralement employé (par exemple l'or) cependant l'adhérence d'un métal noble sur un polymère est difficile à obtenir et la différence de propriétés mécaniques entre le polymère et la couche métallique (module d'élasticité, coefficient de dilatation thermique) provoquent des phénomènes de fatigue prématurés et conduisent à une dérive de la réponse du capteur en fonction de la température. De plus, l'élasticité du capteur mécanique et donc son domaine de réversibilité sont limités par le métal.

C'est pourquoi, l'invention propose d'utiliser des polymères thermostables dont on sait qu'ils peuvent être irradiés en surface pour en modifier les propriétés électriques (US-A-4 199 650).

Plus précisément, pour pallier les différents inconvénients de l'art antérieur, la présente invention propose un capteur mécanique utilisant un film de polymère thermostable dont la partie supérieure (A) est rendue conductrice, le reste du film de polymère constituant une seconde partie isolante référencée (B). Plus précisément, l'invention a pour objet un capteur mécanique permettant par sa propre déformation de mesurer le déplacement ou la déformation d'un objet ou la contrainte qu'il exerce. Ce capteur est caractérisé en ce qu'il comprend un film de polymère dont la partie supérieure (A) est rendue conductrice, la partie (B) inférieure étant isolante, la résistance de ladite partie (A) étant modulée par la déformation du capteur. De préférence, la partie supérieure (A) comprend des motifs conducteurs linéaires alignés dans l'axe de la déformation du capteur et mis en série de manière à augmenter la sensibilité du capteur.

Le polymère utilisé est de préférence un polymère thermostable pouvant être un polyimide ou un polyphénylquinoxaline ou bien un polysulfure de phénylène.

L'invention a également pour objet un procédé de réalisation de capteur mécanique utilisant un film de polymère caractérisé en ce qu'il comprend l'irradiation par un faisceau d'ions d'une surface du film de manière à définir une partie supérieure (A) conductrice, la partie inférieure (B) restant isolante. L'irradiation par un faisceau d'ions peut être effectuée au travers d'un masque afin de définir des motifs conducteurs linéaires alignés dans l'axe de la déformation du capteur. Ces motifs conducteurs peuvent également être obtenus en gravant, par gravure ionique réactive ou par photoablation grâce à un laser excimère, la partie (A) préalablement irradiée.

Dans le procédé selon l'invention, le polymère employé peut avantageusement être un polyimide et l'irradiation ionique peut être générée par un faisceau d'ions $N_2^+$ d'énergie voisine de 150 keV.

L'invention sera mieux comprise et d'autres avantages apparaîtront à la lecture de la description qui va suivre et des figures annexées parmi lesquelles :

- la figure 1 montre un schéma de capteur mécanique selon l'invention, se déformant en flexion ;
- la figure 2 illustre l'évolution de la résistivité en fonction de la dose d'irradiation ionique pour plusieurs polymères thermostables [(1) Polyimide, (2) Polyphénylquinoxaline] ;
- la figure 3 montre le comportement de la résistance de surface d'un polymère thermostable irradié, en fonction de la température ;
- la figure 4 illustre la courbe de réponse d'un capteur mécanique selon l'invention, en fonction de l'angle de flexion du film.

Le capteur mécanique selon l'invention fonctionne sur le principe de la modulation de la résistance de la couche irradiée au cours de la déformation.

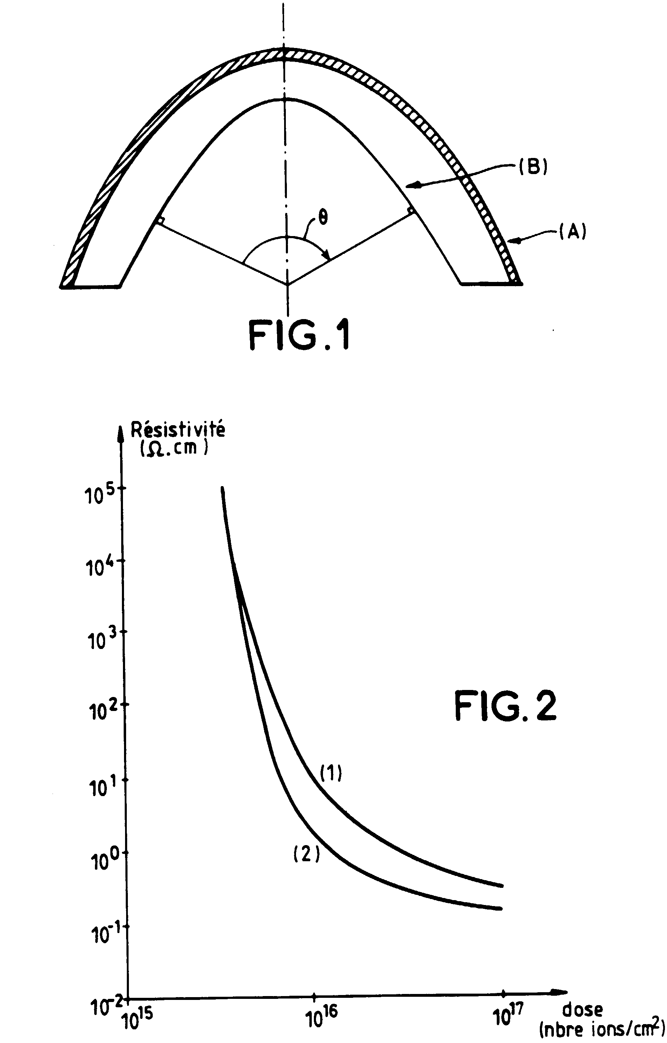

Le capteur mécanique illustré à la figure 1 peut être utilisé pour mesurer la flexion d'un objet (par exemple dans le domaine médical : la flexion d'un membre). Le capteur étant fixé à l'objet, il suit la flexion de cet objet et l'on démontre que si la partie conductrice (A) est sur la face convexe du film, la variation de résistance ΔR de ladite partie est donnée par la formule suivante :

$$\Delta R = K R_o \theta$$

où

$R_o$ est la résistance de la partie (A) lorsque le film n'est pas fléchi.

K est une constante dépendant de la géométrie de la jauge.

θ est l'angle de flexion exprimé en degrés.

La variation de résistance ΔR dépend donc uniquement de l'angle θ mesurant la flexion. Le capteur mécanique selon l'invention est capable d'enregistrer de forts déplacements angulaires et n'est pas limité par des problèmes d'élasticité de la couche conductrice tels que ceux rencontrés dans l'art antérieur ; en effet la partie conductrice (A) est intégrée au polymère et conserve ses propriétés mécaniques qui confèrent au capteur selon l'invention un avantage important permettant de disposer d'un capteur en couche mince facilement intégrable. Le capteur selon l'invention est préférentiellement constitué d'un film polymère rendu plus conducteur par irradiation par faisceau d'ions et l'intérêt de l'utilisation d'un polymère irradié en surface pour la réalisation de capteur mécanique réside principalement dans les propriétés physicochimiques de la structure partie conductrice (A)/partie isolante (B) ainsi obtenue. En effet, la couche irradiée est intimement liée à la partie (B) par l'intermédiaire d'une interface graduelle et la surface irradiée est chimiquement inerte et insensible à la corrosion.

Par ailleurs, des techniques telles que l'irradiation par faisceau d'ions permettent sur des films de polymère de réduire notablement les résistances pour constituer un capteur suffisamment sensible.

En effet, lors des mesures classiques de résistance, on détecte un courant qui permet de déterminer avec d'autant plus de précision la valeur de la résistance que celle-ci est faible. Dans le capteur mécanique selon l'invention, la partie supérieure (A) du polymère peut être traitée par irradiation grâce à un faisceau d'ions de forte énergie. La figure 2 illustre à cet égard, le comportement de la résistivité de deux polymères thermostables en fonction de la fluence (correspondant au nombre d'ions bombardés par $cm^2$). Non traités, le polyimide et le polyphénylquinoxaline présentent des résistivités d'isolant, lorsque l'énergie apportée par les ions est suffisamment intense grâce à des polymères de ce type on est capable d'obtenir des films de polymères conducteurs en surface avec des résistances surfaciques de l'ordre de 100 à 10 000 ohms par $cm^2$. La profondeur de pénétration des ions peut typiquement être de l'ordre du micron sur un film dont l'épaisseur totale est de l'ordre de 100 à 200 microns. Pour cela, le faisceau d'ions peut typiquement être un faisceau d'ions $N_2^+$ d'énergie voisine de 150 keV.

D'autre part, certains capteurs doivent pouvoir subir des températures élevées (mesure de parties chaudes, stérilisation pour le médical...).

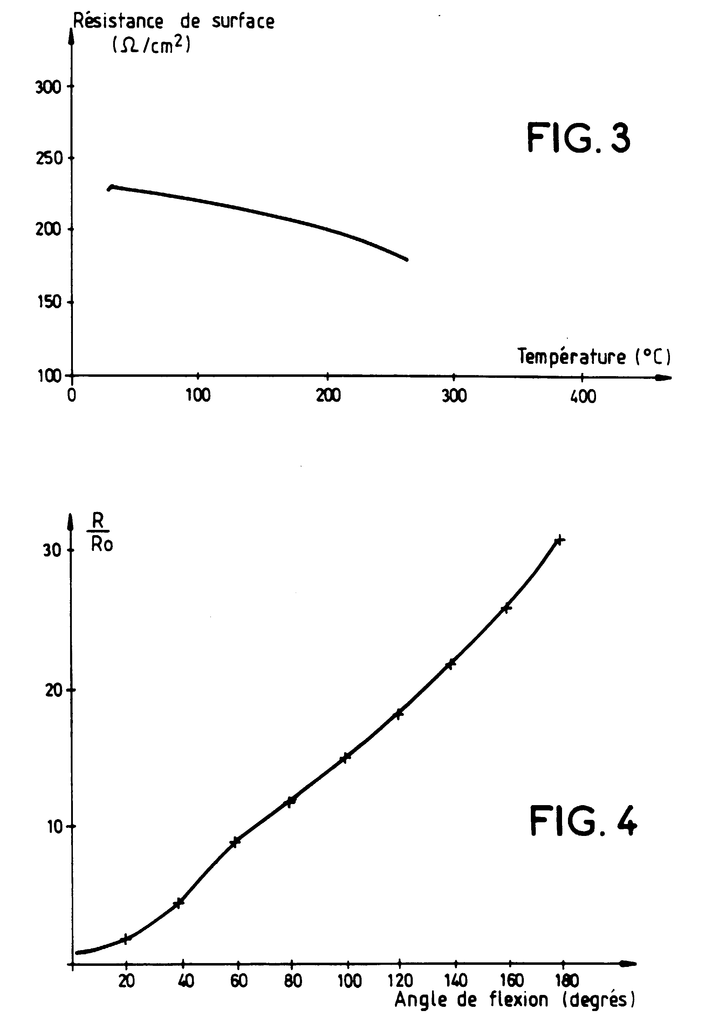

En utilisant avantageusement un polymère thermostable dont le comportement en température est particulièrement stable le capteur selon l'invention peut répondre à de tels impératifs. Il peut s'agir de polyimides, de polyamide imides, de polybenzimidazoles ou bien encore de polysulfure de phénylène. La figure 3 illustre l'évolution de la résistance surfacique en fonction de la température pour un polyimide irradié et témoigne de la bonne stabilité du polymère thermostable après irradiation.

Pour augmenter la sensibilité du capteur proposé dans la présente invention, il est possible de définir des motifs conducteurs au niveau de la partie (A). Ces motifs peuvent être des motifs linéaires alignés dans l'axe de la déformation du capteur et mis en série de manière à amplifier la réponse du capteur et donc sa sensibilité.

Pour définir ces motifs, on peut irradier la partie supérieure (A) au travers d'un masque ou bien utiliser un faisceau d'ions focalisé. Il est également possible de réaliser ces motifs sur une partie (A) irradiée du polymère, par gravure ultérieure. Pour cela on peut avoir recours à la gravure ionique réactive ou à la gravure par laser excimère au travers d'un masque préalablement réalisé par les techniques classiques utilisant des résines de masquage.

Le capteur mécanique peut également être utilisé pour mesurer des variations de pression. Pour cela les extrémités du film de polymère peuvent être fixées sur l'ouverture d'une enceinte dans laquelle on cherche à évaluer des variations de pression qui se traduisent alors par des déformations d'autant plus importantes que le module d'élasticité du matériau utilisé est faible. Ainsi, lorsqu'une pression est exercée sur un film de polymère de faible module d'élasticité, la déformation significative qui résulte de la contrainte exercée sur le film et qui est donc représentative de cette pression, se traduit par une variation de la résistance de la partie conductrice (A) du film, aisément détectable.

Pour illustrer le type de réponse qu'est susceptible de fournir un capteur mécanique selon l'invention, un film de polyimide KAPTON irradié par un faisceau d'ions $N_2^+$ d'énergie 170 keV (pour une fluence de 2,5 $10^{16}$ ions/$cm^2$), présentant une surface de 5 mm sur 20 mm et une épaisseur de 250 µm a été soumis à différentes contraintes de flexion. La réponse d'un tel film est illustrée à la figure 4 et valide d'emploi de matériaux polymères rendus superficiellement conducteurs pour mesurer des déformations angulaires.

**Revendications**

1. Capteur mécanique permettant par sa propre déformation de mesurer le déplacement ou la déformation d'un objet ou la contrainte qu'il exerce, caractérisé en ce qu'il comprend un film de polymère thermostable dont la partie supérieure (A) est rendue conductrice, la partie (B) inférieure étant isolante, la résistance de ladite partie (A) étant modulée par la déformation du capteur.

2. Capteur mécanique selon la revendication 1, caractérisé en ce que la partie supérieure (A) comprend des motifs linéaires alignés dans l'axe de la déformation du capteur et mis en série de manière à augmenter la sensibilité du capteur.

3. Capteur mécanique selon l'une des revendications 1 ou 2, caractérisé en ce que la déformation du film permet de mesurer une pression s'exerçant sur la partie (B) concave du film.

4. Capteur mécanique selon l'une des revendications 1 à 3, caractérisé en ce que le polymère est un polyimide.

5. Capteur mécanique selon l'une des revendications 1 à 3, caractérisé en ce que le polymère est un polyphénylquinoxaline.

6. Capteur mécanique selon l'une des revendications 1 à 3, caractérisé en ce que le polymère est un polysulfure de phénylène.

7. Procédé de réalisation de capteur mécanique utilisant un film de polymère thermostable, caractérisé en ce qu'il comprend l'irradiation par un faisceau d'ions de la surface du film de manière à définir une partie supérieure (A) conductrice, la partie inférieure (B) dudit film restant isolante.

8. Procédé de réalisation de capteur mécanique selon la revendication 7, caractérisé en ce que l'irradiation par un faisceau d'ions est effectuée au travers d'un masque de manière à définir des motifs conducteurs.

9. Procédé de réalisation de capteur de contrainte selon la revendication 7, caractérisé en ce qu'il comprend la gravure locale de la surface (A) irradiée par un faisceau d'ions.

10. Procédé de réalisation de capteur mécanique selon la revendication 9, caractérisé en ce que la gravure est effectuée par gravure ionique réactive.

11. Procédé de réalisation de capteur mécanique selon la revendication 9, caractérisé en ce que la gravure est effectuée par photoablation grâce à un laser excimère.

12. Procédé de réalisation de capteur mécanique selon l'une des revendications 7 à 11, caractérisé en ce que le polymère est un polyimide.

13. Procédé de réalisation de capteur mécanique selon l'une des revendications 7 à 12, caractérisé en ce que l'irradiation provient d'un faisceau d'ions $N_2^+$ d'énergie comprise entre 150 et 200 keV.

**Patentansprüche**

1. Mechanische Sonde, die durch ihre eigene Verformung eine Verschiebung oder Verformung eines Gegenstands oder die aus dieser Verformung resultierende Kraft zu messen erlaubt, dadurch gekennzeichnet, daß sie einen thermostabilen Polymerfilm enthält, dessen oberer Bereich (A) leitend gemacht ist, während der untere Bereich (B) isolierend ist, wobei der Widerstand des leitenden Bereichs (A) durch die Verformung der Sonde verändert wird.

2. Mechanische Sonde nach Anspruch 1, dadurch gekennzeichnet, daß der obere Bereich (A) lineare, zur Verformungsachse der Sonde fluchtende Muster enthält, die in Serie geschaltet sind, so daß die Empfindlichkeit der Sonde erhöht wird.

3. Mechanische Sonde nach einem der Ansprüche 1 oder 2, dadurch gekennzeichnet, daß die Verformung des Films die Messung eines Drucks erlaubt, der auf den konkaven Bereich (B) des Films einwirkt.

4. Mechanische Sonde nach einem der Ansprüche 1 bis 3, dadurch gekennzeichnet, daß das Polymer ein Polyimid ist.

5. Mechanische Sonde nach einem der Ansprüche 1 bis 3, dadurch gekennzeichnet, daß das Polymer ein Polyphenylquinoxalin ist.

6. Mechanische Sonde nach einem der Ansprüche 1 bis 3, dadurch gekennzeichnet, daß das Polymer ein Polyphenylensulfid ist.

7. Verfahren zur Herstellung einer mechanischen Sonde, die einen thermostabilen Polymerfilm verwendet, dadurch gekennzeichnet, daß es die Bestrahlung der Oberfläche des Films mit einem Ionenstrahl enthält, so daß ein oberer, leitender Bereich (A) definiert wird, während der untere Bereich (B) des Films isolierend bleibt.

8. Verfahren zur Herstellung einer mechanischen Sonde nach Anspruch 7, dadurch gekennzeichnet, daß die Bestrahlung mit einem Ionenstrahl durch eine Maske hindurch erfolgt, so daß leitende Muster definiert werden.

9. Verfahren zur Herstellung einer Kraftmeßsonde nach Anspruch 7, dadurch gekennzeichnet, daß es eine lokale Gravierung der mit einem Ionenstrahl bestrahlten Oberfläche (A) enthält.

10. Verfahren zur Herstellung einer mechanischen Sonde nach Anspruch 9, dadurch gekennzeichnet, daß die Gravierung eine reaktive Ionengravur ist.

11. Verfahren zur Herstellung einer mechanischen Sonde nach Anspruch 9, dadurch gekennzeichnet, daß die Gravierung durch Fotoablation mit einem Exzimerlaser erfolgt.

12. Verfahren zur Herstellung einer mechanischen Sonde nach einem der Ansprüche 7 bis 11, dadurch gekennzeichnet, daß das Polymermaterial ein Polyimid ist.

13. Verfahren zur Herstellung einer mechanischen Sonde nach einem der Ansprüche 7 bis 12, dadurch gekennzeichnet, daß bei der Bestrahlung ein Strahl von $N_2^+$-Ionen einer Energie zwischen 150 und 200 keV verwendet wird.

**Claims**

1. Mechanical gauge, making it possible, by means of its own deformation, to measure the displacement or the deformation of an object or the force which it exerts, characterized in that it comprises a thermally stable polymer film, the upper part (A) of which is rendered conductive and the lower part (B) of which is insulating, the resistance of the said part (A) being altered by the deformation of the gauge.

2. Mechanical gauge according to Claim 1, characterized in that the upper part (A) comprises linear recurring units, aligned in the axis of deformation of the gauge and connected in series so as to increase the sensitivity of the gauge.

3. Mechanical gauge according to one of Claims 1 and 2, characterized in that the deformation of the film makes it possible to measure a pressure exerted on the concave part (B) of the film.

4. Mechanical gauge according to one of Claims 1 to 3, characterized in that the polymer is a polyimide.

5. Mechanical gauge according to one of Claims 1 to 3, characterized in that the polymer is a polyphenylquinoxaline.

6. Mechanical gauge according to one of Claims 1 to 3, characterized in that the polymer is a polyphenylene sulphide.

7. Process for the production of a mechanical gauge using a thermally stable polymer film, characterized in that it comprises the irradiation of the surface of the film with an ion beam so as to define a conductive upper part (A), the lower part (B) of the said film remaining insulating.

8. Process for the production of a mechanical gauge according to Claim 7, characterized in that the ion-beam irradiation is carried out through a mask so as to define conductive recurring units.

9. Process for the production of a strain gauge according to Claim 7, characterized in that it comprises the local etching of the surface (A) irradiated by an ion beam.

10. Process for the production of a mechanical gauge according to Claim 9, characterized in that the etching is carried out by reactive ion etching.

11. Process for the production of a mechanical gauge according to Claim 9, characterized in that the etching is carried out by photoablation using an excimer laser.

12. Process for the production of a mechanical gauge according to one of Claims 7 to 11, characterized in that the polymer is a polyimide.

13. Process for the production of a mechanical gauge according to one of Claims 7 to 12, characterized in that the irradiation results from a beam of $N_2^+$ ions of energy between 150 and 200 keV.

FIG.1

FIG.2

FIG. 3

FIG. 4